(19) **Europäisches Patentamt**
**European Patent Office**
**Office européen des brevets**

(11) **EP 2 355 314 A1**

(12) **EUROPÄISCHE PATENTANMELDUNG**

(43) Veröffentlichungstag:
**10.08.2011 Patentblatt 2011/32**

(51) Int Cl.:
*H02K 41/03* [(2006.01)]   *C03B 9/41* [(2006.01)]
*C03B 11/00* [(2006.01)]   *C03B 11/02* [(2006.01)]
*C03B 11/06* [(2006.01)]   *C03B 11/16* [(2006.01)]
*C03B 9/193* [(2006.01)]

(21) Anmeldenummer: **10001197.2**

(22) Anmeldetag: **05.02.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder: **Waltec Maschinen GmbH**
**96352 Wilhelmsthal-Steinberg (DE)**

(72) Erfinder:
• **Rose, Dieter**
  **96328 Küps (DE)**
• **Bassing, Werner**
  **96364 Marktrodach (DE)**

(74) Vertreter: **LOUIS, PÖHLAU, LOHRENTZ**
**Patentanwälte**
**Postfach 30 55**
**90014 Nürnberg (DE)**

(54) **Elektrischer Linearmotor**

(57) Es wird ein elektrischer Linearmotor (18) mit einem Stator (18s) und einem Läufer (18l) beschrieben, wobei der Stator (18s) elektrisch beaufschlagbare Statorwicklungen (18w) und eine unter Wirkung der Statorwicklungen (18w) aktive Statorfläche aufweist und der Läufer (18l) Permanentmagnete (18m) und eine von magnetischen Feldlinien durchgriffene aktive Läuferfläche aufweist, wobei der Läufer (18l) relativ zum Stator (18s) linear in eine bestimmte Linearrichtung geführt ist unter Ausbildung eines Luftspalts zwischen der aktiven Läuferfläche und der aktiven Statorfläche, Die aktive Läuferfläche und die aktive Statorfläche weisen sich entlang der Linearrichtung längs erstreckende Erhebungen und Vertiefungen auf,

*Fig. 3*

**Beschreibung**

Die Erfindung betrifft einen elektrischen Linearmotor.

Linearmotore hoher Leistung werden zunehmend anstelle hydraulischer Antriebe in Glasformmaschinen zum Direktantrieb eines Pressstempels eingesetzt.

Die EP 1 330 417 B1 beschreibt eine Glasformmaschine mit einem Drehtisch, auf dem Glasformen kreisförmig angeordnet sind. Über dem Drehtisch ist ein elektrischer Linearmotor angeordnet, der einen Pressstempel direkt antreibt. Der für einen hinreichend leistungsfähigen elektrischen Linearmotor erforderliche Platzbedarf setzt jedoch dem Einsatz des Linearmotors hinsichtlich kurzer Taktzeiten und Mehrfachanordnungen des Linearmotors Grenzen.

Die US 2006/0181157 A1 beschreibt ein lineares elektrodynamisches System für die Umwandlung mechanischer Bewegung in elektrische Energie oder umgekehrt. Der Stator dieses Systems weist mehrere ringförmig angeordnete elektrische Spulen auf, die mit sternförmig auf einer Achse angeordneten Magnetgruppen zusammenwirken. Es handelt sich also um mehrere parallel geschaltete Lineargeneratoren bzw. Linearmotore.

Aufgabe der vorliegenden Erfindung ist es, einen hinsichtlich der Leistungsfähigkeit und der Abmessungen verbesserten elektrischen Linearmotor anzugeben.

Erfindungsgemäß wird diese Aufgabe mit dem Gegenstand des Anspruchs 1 gelöst.

Es wird ein elektrischer Linearmotor mit einem Stator und einem Läufer vorgeschlagen, wobei der Stator elektrisch beaufschlagbare Statorwicklungen und eine unter Wirkung der Statorwicklungen aktive Statorfläche aufweist und der Läufer Permanentmagnete und eine von magnetischen Feldlinien durchgriffene aktive Läuferfläche aufweist, wobei der Läufer relativ zum Stator linear in eine bestimmte Linearrichtung geführt ist unter Ausbildung eines Luftspalts zwischen der aktiven Läuferfläche und der aktiven Statorfläche, wobei vorgesehen ist, dass die aktive Läuferfläche und/ oder die aktive Statorfläche uneben und nicht konstant gekrümmt ausgebildet sind bzw. ist und mindestens eine sich entlang der Linearrichtung längs erstreckende Erhebung und/oder mindestens eine sich entlang der Linearrichtung längs erstreckende Vertiefung aufweisen bzw. aufweist.

Die aktive Läuferfläche ist die Läuferfläche, die aktiv zur Läuferbewegung beiträgt und über die die Kräfte zwischen Stator und Läufer übertragen werden. Aus der übertragenen Kraft und der aktiven Läuferfläche kann die in der aktiven Läuferfläche auftretende Flächenbelastung bestimmt werden. Die aktive Statorfläche ist zunächst eine potentiell aktive Fläche, denn infolge der Linearbewegung des Läufers relativ zum Stator ist immer nur der Anteil der aktiven Statorfläche aktiv, der mit der aktiven Läuferfläche korrespondiert. Die aktive Statorfläche ist daher größer als die aktive Läuferfläche, jedoch ist die Flächenbelastung der aktiven Statorfläche so hoch wie die Flächenbelastung der aktiven Läuferfläche, weil immer nur der der aktiven Läuferfläche entsprechende Abschnitt der aktiven Statorfläche belastet ist.

Die aktive Läuferfläche ist gebildet aus der Länge bzw. der Umfangslänge des Läuferkerns und der längs der Linearachse erstreckten aktiven Höhe. Die Erhöhungen und Vertiefungen falten die aktive Läuferfläche bzw. Statorfläche auf, so dass die Umfangslänge steigt und bei gleicher aktiver Höhe die aktive Fläche vergrößert ist. Die so entstandene aktive Fläche kann bei bevorzugten Ausführungen vereinfacht durch das Attribut "wellenförmig" beschrieben werden.

Der erfindungsgemäße Linearmotor zeichnet sich dadurch aus, dass er wegen der vorzugsweise wellenförmig gefalteten aktiven Außenfläche des Läufers gegenüber Linearmotoren nach dem Stand der Technik bei gleicher Bauhöhe eine höhere Kraft entfaltet oder bei gleicher Kraftentfaltung eine geringere Bauhöhe aufweisen kann und/oder schmaler ausgebildet sein kann.

Weiter kann der Linearmotor auch eine verringerte Masse und/oder eine geringere Schwingungsanfälligkeit aufweisen.

Der erfindungsgemäße Linearmotor kann so beispielsweise mit einer höheren Taktfrequenz betrieben werden, so dass bei Einsatz beispielsweise in einer Glasformmaschine der Ausstoß an Glasformteilen erhöht werden kann.

Ein weiterer Vorteil kann sein, dass mehrere der erfindungsgemäßen Linearmotore eng beieinander angeordnet sein können, weil sie bei gleich oder höherer Leistungsfähigkeit schmaler ausgebildet sein können, als Linearmotore nach dem Stand der Technik, so dass eine weitere Steigerung des Ausstoßes durch Parallelbearbeitung möglich ist.

Der erfindungsgemäße Linearmotor kann auch an Drehtischen mit geringem Durchmesser eingesetzt werden, die gegenüber Drehtischen mit größerem Durchmesser mit einer höheren Taktfrequenz betreibbar sind, wodurch der Ausstoß an Glasartikeln erhöhbar ist.

Es kann vorgesehen sein, dass die aktive Statorfläche und die aktive Läuferfläche im Querschnitt senkrecht zur Linearrichtung komplementär zueinander ausgebildet sind. Zwischen Innenwand des Stators und die Außenwand des Läufers kann so ein konstanter Luftspalt zwischen Stator und Läufer ausgebildet sein.

Weiter kann vorgesehen sein, dass die Erhebungen und Vertiefungen in einem regelmäßigen Muster angeordnet sind.

In einer weiteren Ausbildung kann vorgesehen sein, dass das Muster der Erhebungen und Vertiefungen symmetrisch zu einer längs zur Bewegungsrichtung angeordneten Längsebene ausgebildet ist.

Weiter kann vorgesehen sein, dass die Erhebungen und/oder Vertiefungen im Querschnitt senkrecht zur linearen Bewegungsrichtung wellenförmig mit abgerundeten Wellenbergen und/oder Wellentälern oder mit plissierten Wellenbergen und/oder Wellentälern ausgebildet sind. Bei der plissierten Ausbildung handelt es sich um scharfkantige Erhebungen in der Art einer Plissee-Faltung, während die abgerundeten Ausführungen mit der Form von Wellblech vergleichbar sind.

Es kann vorgesehen sein, dass der Läufer in einem Innenraum des Stators vom Stator umgeben oder an einer Außenseite des Stators den Stator umgebend linear geführt ist unter Ausbildung eines ringförmigen Luftspalts zwischen der aktiven Läuferfläche und der aktiven Statorfläche. Diese Bauform des Linearmotors kann auch als koaxialer Linearmotor bezeichnet werden. Koaxiale Linearmotoren haben den Vorteil, dass die Anziehungskräfte zwischen Stator und Läufer weitgehend kompensierbar sind, so dass die Lagerbelastung sinkt und weiter geringere Anforderungen an die Steifigkeit der Motorkonstruktion gestellt werden.

Es kann vorgesehen sein, dass die aktiven Läuferfläche und/oder aktiven Statorfläche einen senkrecht zur linearen Bewegungsrichtung ausgebildeten Querschnitt mit im wesentlichen runder Grundkonfiguration aufweist, wobei die Kontur des Querschnitts zumindest abschnittsweise wellenförmig ist.

Es kann insbesondere vorgesehen sein, dass die Grundkonfiguration des Querschnitts kreisrund ist.

Es kann aber auch vorgesehen sein, dass die Grundkonfguration des Querschnitts elliptisch ist.

Es ist auch möglich, dass die Grundkonfiguration des Querschnitts ein regelmäßiges Vieleck ist. Es kann sich beispielsweise um ein Quadrat oder Rechteck handeln, wobei durch die Wahl einer rechteckförmigen Grundkonfiguration schmale Linearmotore ausbildbar sind, die sich gut in einer Reihe nebeneinander anordnen lassen.

In einer weiteren Ausbildung kann vorgesehen sein, dass der Läufer einen rechteckförmigen Querschnitt aufweist, dessen Außenkontur abschnittsweise ein wellenförmiges Profil aufweist, Beispielsweise kann vorgesehen sein, nur die Längsseiten des rechteckförmigen Querschnitts mit einem Profil auszubilden. Bevorzugt können für gegenüberliegende Abschnitte des Querschnitts spiegelbildliche Profile sein.

Weiter kann vorgesehen sein, dass der Läufer in einem Innenraum des Stators vom Stator umgeben oder an einer Außenseite des Stators den Stator umgebend linear geführt ist unter Ausbildung eines ringförmigen Luftspalts zwischen der aktiven Läuferfläche und der aktiven Statorfläche und dass die aktive Läuferfläche und/oder die aktive Rotorfläche im Querschnitt senkrecht zur Linearrichtung ringförmig, aber nicht kreisringförmig ausgebildet sind bzw. ist, wobei der ringförmige Querschnitt die Kontur eines regelmäßigen oder unregelmäßigen Vielecks aufweist, dessen mindestens eine Ecke die mindestens eine Erhebung bildet oder der ringförmige, nicht kreisringförmige Querschnitt die Kontur einer Rundfläche mit über den Verlauf der Kontur variierten Krümmungsradius aufweist dessen mindestens ein Krümmungsmaximum mit minimalen Krümmungsradius die mindestens eine Erhebung bildet und/oder dessen mindestens ein Krümmungsminimum mit maximalen Krümmungsradius die mindestens eine Vertiefung bildet.

Das Vieleck kann als Quadrat oder längliches Rechteck ausgebildet sein.

Es kann auch vorgesehen sein, dass die Kontur der Rundfläche elliptisch oder eiförmig ausgebildet ist.

Weiter kann vorgesehen sein, dass der Linearmotor folgende Leistüngsdaten aufweist: Nennkraft: 5 bis 20kN und/oder Spitzenkraft: 10 bis 40 kN und/oder Hub: 100 bis 1000 mm und/oder Geschwindigkeit: 0,1 bis 5 m/s.

Der erfindungsgemäße Linearmotor kann für den Einsatz in einer Glasverarbeitungsmaschine vorgesehen sein, wobei der elektrische Linearmotor einen Pressenstempel und/oder einen Dosierplunger antreibt.

Es kann vorgesehen sein, dass die Glasverarbeitungsmaschine einen Drehtisch mit Glasformen aufweist.

Weiter kann der Drehtisch einen Schrittantrieb aufweisen, der es ermöglicht, die Glasformen taktweise zu bewegen.

Es kann vorgesehen sein, dass die Glasformen mit konstantem Teilungsabstand kreisförmig auf dem Drehtisch angeordnet sind, wobei der Mittelpunkt des Teilkreises auf der Drehachse des Drehtisches liegt.

Weiter kann vorgesehen sein, dass die Glasformen in Gruppen angeordnet sind und die Gruppen mit konstantem Teilungsabstand kreisförmig auf dem Drehtisch angeordnet sind, wobei der Mittelpunkt des Teilkreises auf der Drehachse des Drehtisches liegt. Es können beispielsweise drei Glasformen pro Gruppe vorgesehen sein, so dass gleichzeitig drei Glasformteile herstellbar sind, wobei für jede der Glasformen der Gruppe mindestens ein Linearmotor mit Pressstempel vorgesehen sein kann. Alternativ kann ein Linearmotor vorgesehen sein, der drei Pressstempel antreibt.

Es kann vorgesehen sein, dass die Glasformen einer Gruppe auf einer Geraden angeordnet sind, wobei die Gerade eine Tangente oder Sekante an den Teilkreis bildet.

Es kann weiter vorgesehen sein, dass der Drehtisch in eine Arbeitsphase schaltbar ist, in der der Drehtisch eine Position einnimmt, in der der mindestens eine Linearmotor über einer Glasform angeordnet ist, und dass der Drehtisch in eine Transportphase schaltbar ist, in der ein Schrittantrieb den Drehtisch um den Teilungsabstand dreht.

In einer weiteren vorteilhaften Ausbildung kann vorgesehen sein, dass mehrere Linearmotore nebeneinander angeordnet sind, wie weiter oben ausgeführt.

Es kann vorgesehen sein, dass die Linearmotore Läufer mit einem im Wesentlichen rechteckförmigen Querschnitt aufweisen.

Weiter kann vorgesehen sein, dass die Linearmotore mit ihren Schmalseiten nebeneinander angeordnet sind.

In einer weiteren bevorzugten Ausführung können die Linearmotore fluchtend nebeneinander angeordnet sein.

Die Erfindung wird nun anhand von Ausführungsbeispielen näher erläutert. Es zeigen

Fig. 1    ein erstes Ausführungsbeispiel der erfindungsgemäßen Glasverarbeitungsmaschine mit einem koaxialen Linearmotor in einer schematischen Vorderansicht;

Fig. 2    die Glasverarbeitungsmaschine in Fig. 1 in einer schematischen Draufsicht;

Fig. 3    einen schematischen Querschnitt des Linearmotors in Fig. 1;

Fig. 4    eine schematische Schnittdarstellung des Linearmotors in Fig. 1;

Fig. 5    eine schematische Schnittdarstellung eines koaxialen Linearmotors nach dem Stand der Technik;

Fig. 6    eine erste Prinzipdarstellung zur Veranschaulichung des Magnetflussverlaufs in dem koaxialen Linearmotor;

Fig. 7    eine zweite Prinzipdarstellung zur Veranschaulichung des Magnetflussverlaufs in dem koaxialen Linearmotor;

Fig. 8    eine dritte Prinzipdarstellung zur Veranschaulichung des Magneiflussverlaufs in dem koaxialen Linearmotor;

Fig. 9    ein erstes Ausführungsbeispiel eines erfindungsgemäßen koaxialen Linearmotors mit länglichem Querschnitt in einer schematischen Schnittdarstellung;

Fig. 10   ein zweites Ausführungsbeispiel eines erfindungsgemäßen koaxialen Linearmotors mit länglichem Querschnitt in einer schematischen Schnittdarstellung;

Fig. 11   ein drittes Ausführungsbeispiel eines erfindungsgemäßen koaxialen Linearmotors mit länglichem Querschnitt in einer schematischen Schnittdarstellung;

Fig. 12   ein viertes Ausführungsbeispiel eines erfindungsgemäßen koaxialen Linearmotors mit länglichem Querschnitt in einer schematischen Schnittdarstellung;

Fig. 13   ein zweites Ausführungsbeispiel der erfindungsgemäßen Glasverarbeitungsmaschine in einer schematischen Draufsicht (Teilansicht).

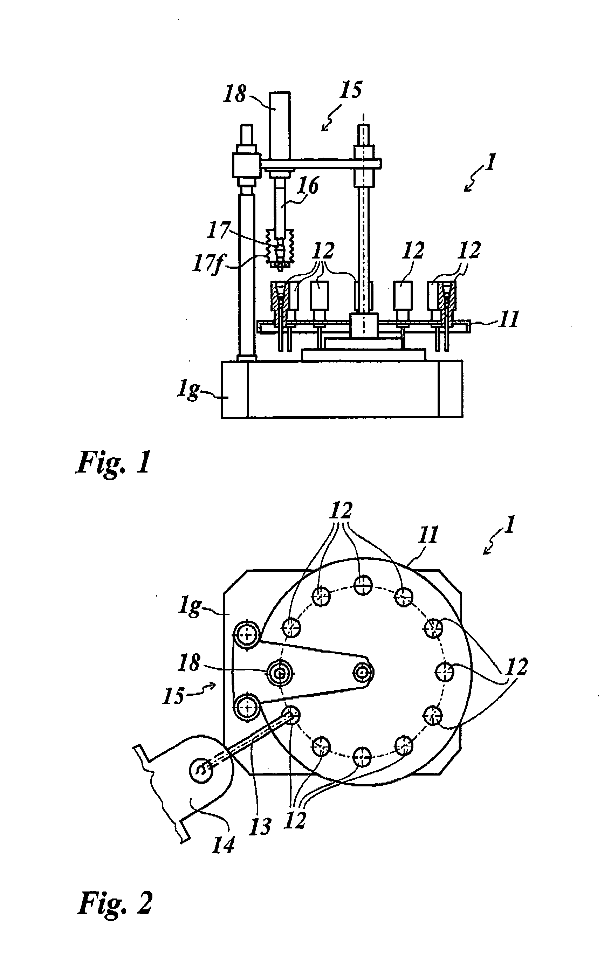

Fig. 1 und 2 zeigen eine Glasverarbeitungsmaschine 1 zur Herstellung von Glasformkörpern aus geschmolzenen Glastropfen.

Auf einem Drehtisch 11, der einen in den Fig. 1 und 2 nicht dargestellten Antrieb aufweist, sind auf einem Teilkreis Pressformen 12 mit gleichem Teilungsabstand angeordnet. In dem in Fig. 1 und 2 dargestellten Ausführungsbeispiel sind 12 Pressformen auf dem Teilkreis angeordnet, so dass der Teilungsabstand 30° ist. Der Drehtisch 11 ist folglich im Transporttakt um 30° schaltbar. In dem Ausführungsbeispiel wird der Drehtisch im Transporttakt um 30° im Uhrzeigersinn gedreht.

Ein Speiserkopf 14 ist über einem Rinnensystem 13 angeordnet, dessen Austrittsabschnitt im Arbeitstakt über einer Pressform 12 angeordnet ist.

Eine Pressstation 15 ist über dem Drehtisch 11 angeordnet und weist eine obere Werkzeugaufnahme 16 auf, an deren dem Drehtisch 11 zugewandten Endabschnitt ein Pressstempel 17 angeordnet ist. An der Werkzeugaufnahme 16 ist ein Federkorb 17f mit einem Deckring angeordnet, der von dem Pressstempel 17 durchgreifbar ist. Wenn der Pressstempel 17 in die Pressform abgesenkt ist, verschließt der Deckring die Pressform und formt den Oberrand des in der Pressform geformten Glasformkörpers aus. Die Pressstation 15 ist um einen Teilungsabstand versetzt stromabwärts hinter dem Rinnensystem 13 angeordnet. Der Pressstempel 17 fluchtet im Arbeitstakt mit einer der Pressformen 12. Die Werkzeugaufnahme 16 ist mit dem Läufer eines koaxialen Linearmotors 18 starr verbunden, Der Stator des Linearmotors 18 ist mit dem Gestell der Glasverarbeitungsmaschine 1 verbunden.

Im Arbeitsablauf der Glasverarbeitungsmaschine wird im Speiser 14 ein Glastropfen gebildet und unterhalb des Speiserauslasses von einer in den Fig. 1 und 2 nicht dargestellten Schere abgeschnitten. Dieser Glastropfen hat die Masse des zu produzierenden Glasartikel. Nach dem Scherenschnitt fällt der Glastropfen in das Rinnensystem 13 und fällt vom Auslass des Rinnensystems 13 in eine in der Speiseposition des Drehtisches 11 bereitgestellte leere Pressform 12. Sobald der Glastropfen in der Pressform 12 abgelegt ist, startet der Transporttakt des Drehtisches 11 und die nunmehr mit dem Glastropfen gefüllte Pressform 12 gelangt in die Pressposition unter der Pressstation 15.

Der Pressstempel 17 fährt nach unten, und der Glastropfen wird verpresst, bis die Kavität zwischen der Innenwand der Pressform 12 und der Außenwand des Pressstempels 17 mit schmelzflüssiger Glasmasse ausgefüllt ist. Der Pressstempel verweilt in dieser Lage solange, bis die Glasmasse genügend abgekühlt ist, um formstabil zu bleiben, um die weiteren Prozessschritte bis zur Entnahme des Glasartikels sicherzustellen,

Nach dem Pressen findet auf den der Pressstation 15 folgenden Positionen bis zur Entnahme des Glasartikels im Wesentlichen die Glas- und Formenkühlung statt.

Danach wird der gekühlte Glasartikel aus der Pressform 12 entnommen und in der Regel einer Feuerpoliermaschine zugeführt. Auf der Feuerpoliermaschine werden Pressgrate verschmolzen und wird die Oberfläche der Glasartikel durch Aufschmelzen der Randschicht optisch verbessert.

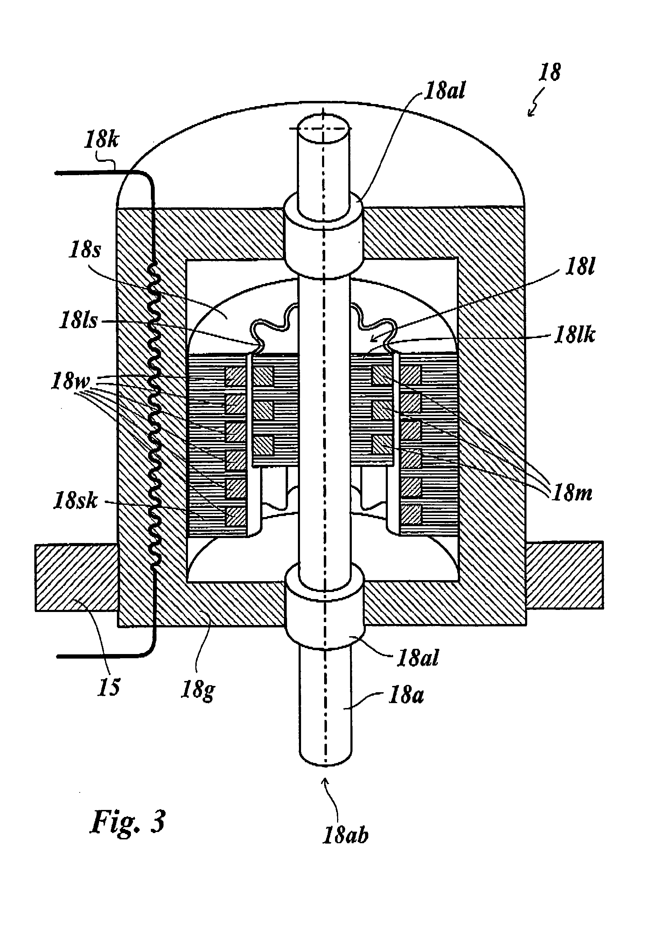

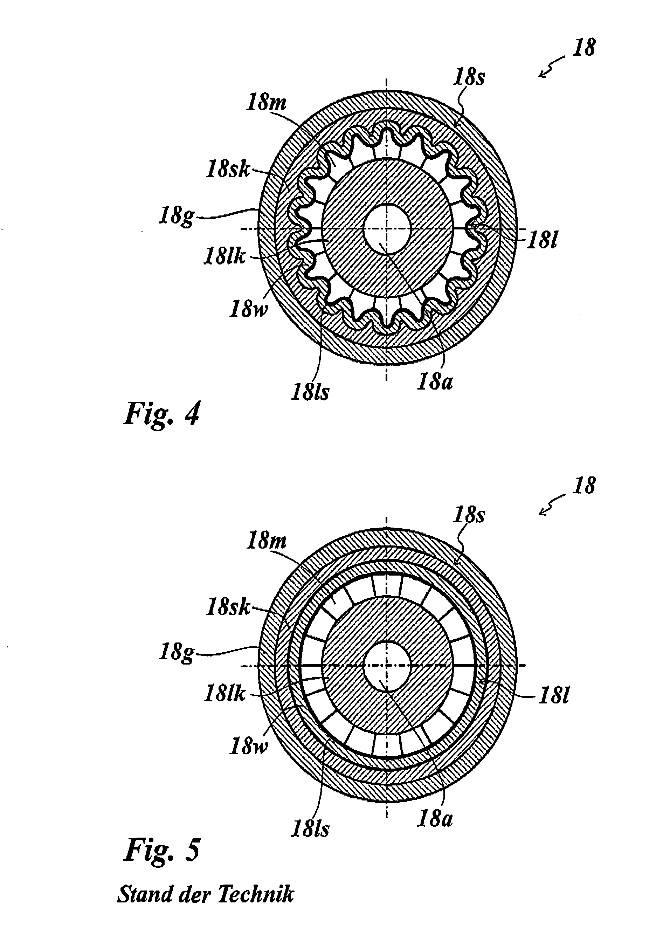

Die Fig. 3 und 4 zeigen den schematischen Aufbau eines zylinderförmig aufgebauten Linearmotors 18. Fig. 3 zeigt einen schematischen Querschnitt durch den Linearmotor 18, Fig. 4 einen schematische Schnittdarstellung des Linearmotors in Fig. 1.

Fig. 3 zeigt in einer schematischen räumlichen Darstellung den Aufbau des Linearmotors 18. Der zylinderförmig aufgebaute Linearmotor 18 weist einen außen liegenden Stator 18s und einem in dem Stator 18s linear geführten Läufer 181 auf. Der Linearmotor 18 weist von außen nach innen folgenden Aufbau auf: einen Statorkern 18sk mit Spulenzähnen, eine in dem Statorkern 18sk angeordnete Statorwicklung 18w, ringförmig angeordnete Permanentmagnete, die einen von mehren Läufermagneten 18m bilden, und einen Läuferkem 181k, auf oder in dem die Läufermagnete 18 m angeordnet sind. Zwischen dem Läufer 181 und dem Stator 18s ist ein Luftspalt 181s ausgebildet. Der Läuferkem 181k ist von einer Motorachse 18a durchgriffen, die in zwei Linearlagern 18al gelagert ist. Der der Glasformmaschine zugewandte Endabschnitt der Motorachse 18a ist als Abtrieb 18ab bezeichnet. Der Linearmotor 18 weist ein Gehäuse 18g auf, in dem der Stator 18s sowie die Linearlager 18al angeordnet sind. Das Gehäuse 18g ist von einer Kühleinrichtung 18k durchgriffen, die in Fig. 3 symbolisch eingezeichnet ist. Das Gehäuse ist über die Pressstation 15 starr mit dem Gestell der Glasformmaschine verbunden.

Wie in Fig. 3 zu erkennen, sind der Läufer 181 und der Stator 18s an ihrem Außenumfang bzw. Innenumfang wellenförmig ausgebildet, so dass der jeweilige Umfang größer ist als bei kreisförmiger Ausbildung. Fig. 4 zeigt in einer Schnittdarstellung senkrecht zur Motorachse, wobei der Schnitt durch eine Statorwicklung 18w gelegt ist, dass auch die Statorwicklungen 18w wellenförmig ausgebildet sind. Fig. 5 zeigt im Vergleich einen nach dem Stand der Technik ausgebildeten Linearmotor mit kreisringförmigem Luftspalt ohne Erhebungen und Vertiefungen in der Luftspalttläche.

Der Läuferkern 181k kann aus weichmagnetischem Vollmaterial ausgebildet sein. Der Statorkern 18sk ist aus aufeinander gestapelten Polschuhscheiben aus weichmagnetischem Material gebildet. Der Statorkern 18sk weist Aussparungen auf, in welche die Statorwicklungen 18w eingebracht sind und die in Achsrichtung der Linearbewegung des Läufers 181, im Weiteren Linearachsrichtung genannt, zwischen benachbarten Statorwicklungen 18w Spulenzähne ausbilden (Fig. 3). Die zwischen den stromdurchflossenen Statorwicklungen 18w und den Läufermagneten 18m ausgebildeten magnetischen Feldlinien verlaufen durch das weichmagnetische Material des Stator- bzw. Läuferkerns und treten im Bereich des Luftspalts vom Statorkern in den Läuferkem über und umgekehrt.

Die Läufermagnete 18m sind in Linearachsrichtung voneinander beabstandet angeordnet (siehe Fig. 3). Die Abstände der Läufermagnete 18m zueinander werden als Polteilung bezeichnet. Analog dazu weisen die zwischen den Statorwicklungen 18w angeordneten Spulenzähne eine Polteilung auf, wobei die beiden Polteilungen nicht übereinstimmen. Mit diesem Teilungsunterschied erzeugt ein weiter unten näher beschriebenes Wanderfeld die Antriebskraft. Vereinfacht kann gesagt werden, dass sich im Betrieb beispielsweise zwei momentan gegenüberstehende Südpole abstoßen, während ein versetzter Nordpol des Stators den nächst folgenden Südpol des Läufers anzieht.

Der zwischen dem Statorkern 18s und dem Läuferkern 18l ausgebildete radiale Luftspalt 18ls sollte so klein wie möglich sein. Übliche Luftspalte betragen zwischen 0,8 und 1,5 mm. Dabei stehen -/+ 0,1 mm Luftspalt in Relation zu +/-3% Antriebskraft, d. h. bei Verringerung des Luftspalts 18ls um 0,1 mm steigt die Antriebskraft um 3 %.

Die als Permanentmagnete ausgebildeten Läufermagnete 18m sind aus Materialien mit hohem Energieprodukt, wie beispielsweise aus Neodym-Eisen-Bor (NdFeB) oder Samarium-Cobalt (SmCo) hergestellt. In Linearachsrichtung benachbarte Läufermagnete 18m weisen eine entgegengesetzte magnetische Polarität auf.

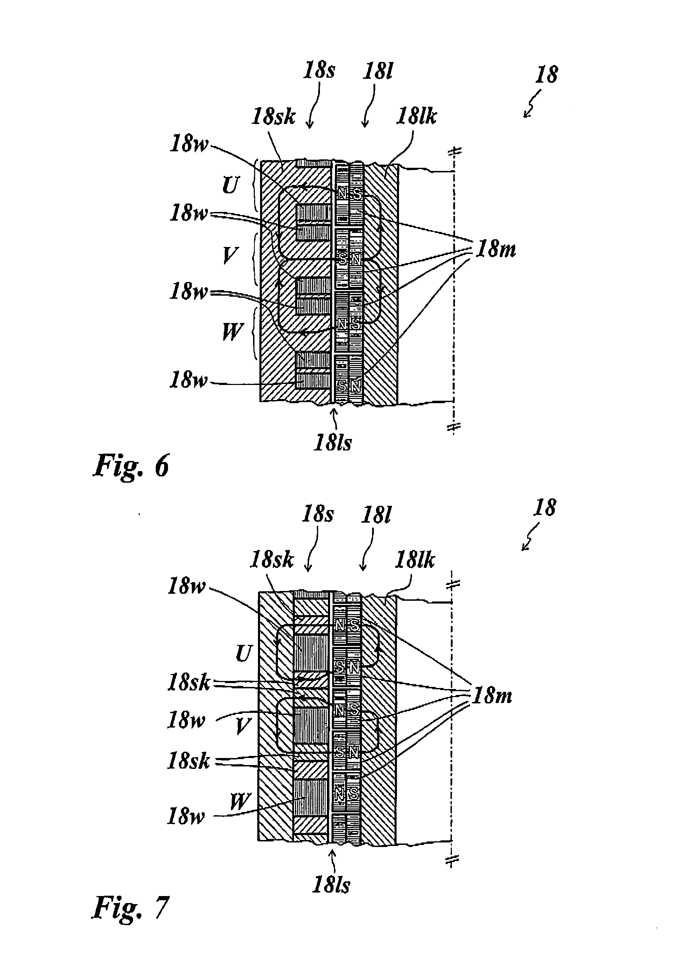

Die Fig. 6 bis 8 zeigen in schematischen Darstellungen drei prinzipielle Ausführungen koaxialer Linearmotore.

In allen drei Beispielen sind die Statorwicklungen 18w für Dreiphasenstrom ausgelegt (U, V, W) und erzeugen im bestromten Zustand das magnetische Wanderfeld, das die in Linearachsrichtung übereinander angeordneten Läufermagnete 18m mitnimmt.

Fig. 6 zeigt ein Ausführungsbeispiel des Linearmotors 18, bei dem die Läufermagnete 18m radial polarisiert sind. Aufeinanderfolgende Läufermagnete 18m weisen eine unterschiedliche Polarität auf, also N, S, N usw. Die Läufermagnete 18m sind auf den Läuferkem 18lk aufgeklebt.

Der Statorkern 18s weist Spulenzähne auf, die von jeweils mindestens einer Statorwicklung 18w umschlossen sind (U, V, W).

In Fig. 6 eingezeichnete Feldlinien verdeutlichen den magnetischen Fluss, der außerhaib der Magnete und Wicklungen durch magnetisch leitfähiges Material läuft und in sich geschlossene Feldlinien aufweist. Die Statorbleche, die den Statorkern 18sk bilden, müssen folglich auch radial ausgerichtet sein und vergleichbar mit Tortenstücken mit keilförmigem Querschnitt ausgebildet sein. Eine solche Anordnung hat jedoch den Nachteil, dass der Aufwand zur Herstellung und Schichtung der Statorbleche vergleichsweise hoch ist. Der Läuferkern 18lk kann als massiver magnetisch leitender Kern ausgebildet sein.

Fig. 7 zeigt ein zweites Ausführungsbeispiel des Linearmotors 18, bei dem die Läufermagnete 18m radial polarisiert sind. Aufeinanderfolgende Läufermagnete 18m weisen eine unterschiedliche Polarität auf, also N, S, N usw. Die Läufermagnete 18m sind auf den Läuferkem 18lk aufgeklebt.

Der Statorkern 18sk ist nun aus axial aufeinandergeschichteten Polschuhscheiben gleicher Dicke gebildet, die in einen zylinderförmigen Mantel eingelegt sind, so dass sich ein einfacher Aufbau ergibt, Bei ungleichmäßiger Dicke kann sich eine Reduzierung der Rastkräfte des Linearmotors 18 ergeben. Die Statorwicklungen 18w sind zwischen den Polschuhscheiben angeordnet.

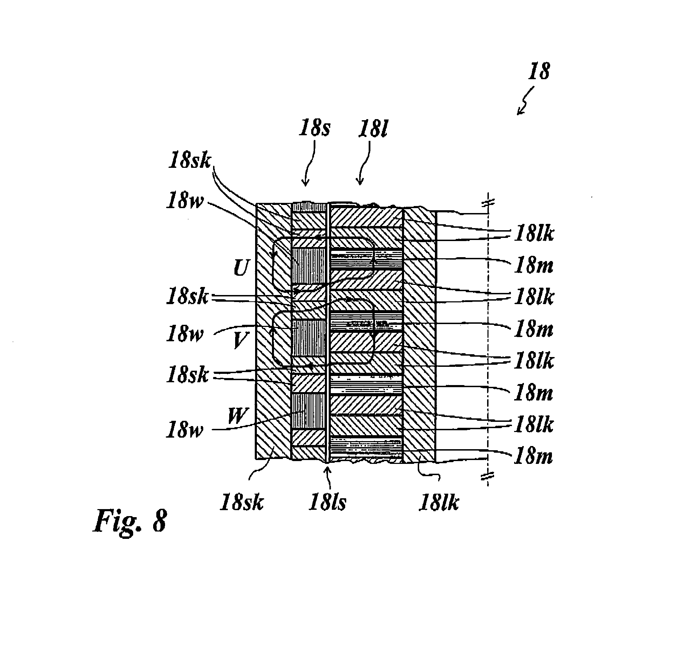

Fig. 8 zeigt ein drittes Ausführungsbeispiel des Linearmotors 18, bei dem die Läufermagnete 18m axial polarisiert sind. Die Läufermagnete 18m sind in den Läuferkem 18lk eingelegt, wobei zwischen den Läufermagneten 18m zu Stapeln angeordnete ringförmige Polschuhscheiben eingelegt sind, wodurch der Kernaufbau des Läufers 18l analog zu dem des Stators 18s ist. Dieser Aufbau kann bevorzugt sein, wobei die Läufermagnete 18m aus gleichartigen Segmenten ausgebildet sein können, die dicht an dicht zu einem Ring angeordnet sind, wie weiter oben in Fig. 4 gezeigt.

Zwischen dem Statorkern 18sk und dem Läuferkern 18lk treten sehr hohe Anziehungskräfte auf, die bei Linearmotoren mit nichtkoaxialem Aufbau insbesondere im Dauerbetrieb zu Verformungen des Läufers und/oder Stators führen können, so dass Stator und Läufer zur Berührung kommen, wobei hoher Verschleiß eintreten kann. Durch den koaxialen Aufbau des Linearmotors 18 tritt eine fast vollständige Kraftkompensation ein, so dass die hohen Anziehungskräfte zwischen Statorkern 18sk und Läuferkern 18lk vergleichsweise kleine Verformungen hervorrufen und die Läuferlager weit weniger belasten.

Für die Leistungsfähigkeit des Linearmotors entscheidend ist ein minimaler Luftspalt und eine maximale aktive Fläche, in der die Kraftübertragung realisiert ist. Die aktive Fläche wird charakterisiert durch das Produkt aus der Umfangslänge des Läuferkerns und der längs der Linearachse erstrecken aktiven Höhe. Für einen zylinderförmigen Läufer nach dem Stand der Technik (Fig. 5) gilt:

$$A = \pi \cdot D \cdot h$$

mit A = aktive Fläche, D = Durchmesser des Läuferkerns und h = aktive Höhe. Die aktive Läuferfläche ist die Läuferfläche, die aktiv zur Läuferbewegung beiträgt und über die die Kräfte zwischen Stator und Läufer übertragen werden. Aus der übertragenen Kraft und der aktiven Läuferfläche kann die in der aktiven Läuferfläche auftretende Flächenbelastung bestimmt werden. Die aktive

Statorfläche ist zunächst eine potentiell aktive Fläche, denn infolge der Linearbewegung des Läufers relativ zum Stator ist immer nur der Anteil der aktiven Statorfläche aktiv, der mit der aktiven Läuferfläche korrespondiert. Die aktive Statorfläche ist daher größer als die aktive Läuferfläche, jedoch ist die Flächenbelastung der aktiven Statorfläche so hoch wie die Flächenbelastung der aktiven Läuferfläche, weil immer nur der der aktiven Läuferfläche entsprechende Abschnitt der aktiven Statorfläche belastet ist.

Demgegenüber weist der in Fig. 3 und 4 dargestellte erfindungsgemäße Linearmotor 18 eine gegenüber einem Linearmotor des Standes der Technik vergrößerte Umfangslänge auf, wodurch die aktive Fläche vergrößert ist. Die aktive Fläche weist Erhebungen und Vertiefungen auf. Die Erhöhungen und Vertiefungen falten die aktive Läuferfläche bzw. Statorfläche auf, so dass die Umfangslänge steigt und bei gleicher aktiver Höhe die aktive Fläche vergrößert ist. Die so entstandene aktive Fläche kann vereinfacht durch das Attribut "wellenförmig" beschrieben werden, Der Läufer 18l ist im Querschnitt sternförmig ausgebildet, gleichermaßen ist die Innenkontur des Stators 18s im Querschnitt sternförmig ausgebildet und folglich ist auch die Statorwicklung 18w sternförmig ausgebildet. Es ist aber auch möglich, dass die Statorwicklung 18w kreisförmig und nur die Innenkontur des Stators 18s sternförmig ausgebildet ist.

Ein nach Fig. 3 ausgebildeter Linearmotor mit einem Außendurchmesser von 200 mm und einem aktiven Durchmesser von 140 mm weist eine aktive Umfangslänge von 762 mm auf. Demgegenüber weist ein nach dem Stand der Technik ausgebildeter Linearmotor gleicher Abmessung bei gleichem aktiven Durchmesser nur eine aktive Umfangslänge von 440 mm auf. Durch die Erfindung wird hier eine Steigerung der Motorkraft auf 760/440 = 172 %, d. h. um 72 % erreicht.

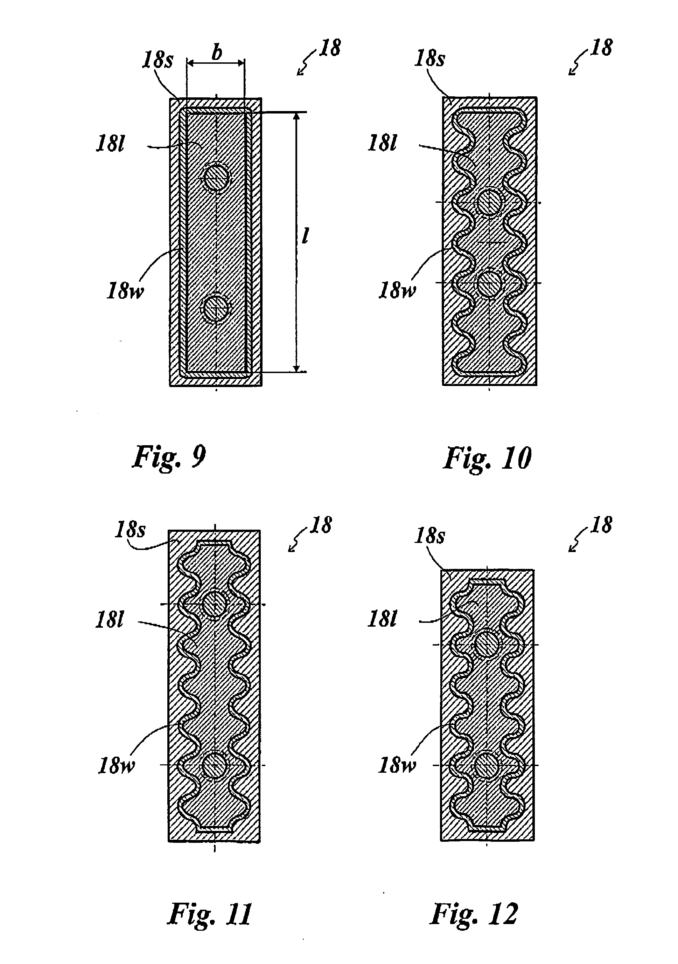

Die Fig. 9 bis 12 zeigen Ausführungsbeispiele koaxialer Linearmotore mit rechteckförmigem Läuferquerschnitt.

Fig. 9 zeigt ein erstes Ausführungsbeispiel eines erfindungsgemäßen Linearmotors mit rechteckförmigem Läuferquerschnitt, der im folgenden als Vergleichsmaßstab herangezogen wird. Ein derartiger Linearmotor mit einer Läuferbreite b weist gegenüber einem Linearmotor mit kreisförmigem Querschnitt und einem Läuferdurchmesser b bereits eine aktive Fläche auf, die mindestens um 27 % (bei quadratischem Querschnitt) größer ist als bei dem Linearmotor nach dem Stand der Technik. Die Spitzenkraft des Linearmotors in Fig. 9 beträgt $F_s$ = 35 kN, die spezielle Flächenkraftdichte im Luftspalt 8 N/cm$^2$. Die erforderliche aktive Fläche beträgt somit A = 4 375 cm$^2$. Der Läufer 18l weist einen rechteckigen Querschnitt auf und ist im rechteckförmigen Innenraum des Stators 18s unter Ausbildung eines Luftspalts geführt. Der Läufer 18l hat die Querschnittsabmessungen b x I = 70 x 360 mm, d. h. die aktive Umfangslänge des Läufers beträgt (2 x 70) + (2 x 360) mm = 860 mm. Die Höhe der aktiven Fläche beträgt 509 mm.

Fig. 10 zeigt ein zweites Ausführungsbeispiel eines erfindungsgemäßen Linearmotors mit rechteckförmigem Läuferquerschnitt.

Der Linearmotor 18 weist einen im Querschnitt im Wesentlichen rechteckförmigen Läufer 18l auf, der an beiden Längsseiten ein wellenförmiges Profil aufweist, d. h. die Oberfläche des Läufers 18l ist wellblechartig mit Erhebungen und Vertiefungen ausgebildet, wodurch die aktive Umfangslänge gegenüber der Umfangslänge des in Fig. 9 dargestellten Linearmotors weiter vergrößert ist. Die Umfangslänge ist in dem in Fig. 10 dargestellten Ausführungsbeispiel von 860 mm auf 1400 mm vergrößert, so dass die aktive Höhe bei gleichen Leistungsparametern auf 313 mm verkürzt ist und die für die Steifigkeit relevante Höhe des Stators 18s von 1009 mm auf 813 mm gesenkt ist.

Die Stirnseiten des rechteckförmigen Läuferquerschnitts sind aus konstruktiven Gründen nicht gewellt ausgebildet und gehen mit einem nach außen gewölbten Bogenabschnitt in die gewellten Längsseiten über.

Fig. 11 zeigt ein drittes Ausführungsbeispiel eines erfindungsgemäßen Linearmotors mit rechteckförmigem Läuferquerschnitt.

Der Linearmotor 18 in Fig. 11 ist wie der in Fig. 10 beschriebene Linearmotor ausgebildet, mit dem Unterschied, dass die aktive Umfangslänge durch Verlängerung der Längsseiten des Läufers 18l auf 1450 mm vergrößert ist, und dass die Stirnseiten des rechteckförmigen Läuferquerschnitts mit einem nach innen gewölbten Bogenabschnitt in die gewellten Längsseiten übergehen. Die aktive Höhe ist nun bei gleichen Leistungsparametern auf 302 mm verkürzt und die für die Steifigkeit relevante Höhe des Stators 18s von 1009 mm auf 802 mm gesenkt.

Fig. 12 zeigt ein viertes Ausführungsbeispiel eines erfindungsgemäßen Linearmotors mit rechteckförmigem Läuferquerschnitt.

Der Linearmotor 18 in Fig. 12 ist wie der in Fig. 10 beschriebene Linearmotor ausgebildet, mit dem Unterschied, dass die aktive Umfangslänge von 860 mm auf 1250 mm erhöht ist, obwohl die Längsseiten des Läufers 18l gegenüber dem in Fig. 9 dargestellten Ausführung verkürzt sind, und dass die Stirnseiten des rechteckförmigen Läuferquerschnitts mit einem nach innen gewölbten Bogenabschnitt in die gewellten Längsseiten übergehen. Die aktive Höhe ist nun bei gleichen Leistungsparametern auf 350 mm verkürzt und die für die Steifigkeit relevante Höhe des Stators 18s von 1009 mm auf 850 mm gesenkt.

Die Läufermagnete in den Ausführungen in Fig. 11 und 12 können wegen der speziellen Ausbildung des Läuferumfangs aus gleichartigen Permanentmagneten zusammengesetzt werden, so dass ein ebenso einfacher Aufbau möglich ist, wie weiter oben in Fig. 4 dargestellt.

In der nachfolgenden Tabelle sind Parameter der in den Fig. 9 bis 12 dargestellten Linearmotoren gegenübergestellt.

| Ausführungsbeispiel | Fig. 7 | Fig. 8 | Fig. 9 | Fig. 10 |
|---|---|---|---|---|
| aktive Umfangslänge | 860 mm | 1400 mm | 1450 mm | 1250 mm |
| aktive Höhe | 509 mm | 313 mm | 302 mm | 350 mm |
| Läuferlänge | 509 mm | 313 mm | 302 mm | 350 mm |
| aktiver Hub | 500 mm | 500 mm | 500 mm | 500 mm |
| Länge I des Läuferquerschnitts | 440 mm | 440 mm | 478 mm | 416 mm |
| Breite b des Läuferquerschnitts | 150 mm | 150 mm | 150 mm | 150 mm |
| Höhe des Stators | 1009 mm | 813 mm | 802 mm | 850 mm |
| relative aktive Umfangslänge | 1,00 | 1,63 | 1,69 | 1,45 |

Die gegenüber dem Vergleichsmotor kürzere Baulänge der Linearmotore in Fig. 8 bis 10 erhöht die Steifigkeit des Linearmotors weiter und reduziert schädliche Schwingungen, so dass der Linearmotor mit höherer Taktzahl betreibbar ist, wodurch die Taktzeit des Drehtischs reduziert werden kann.

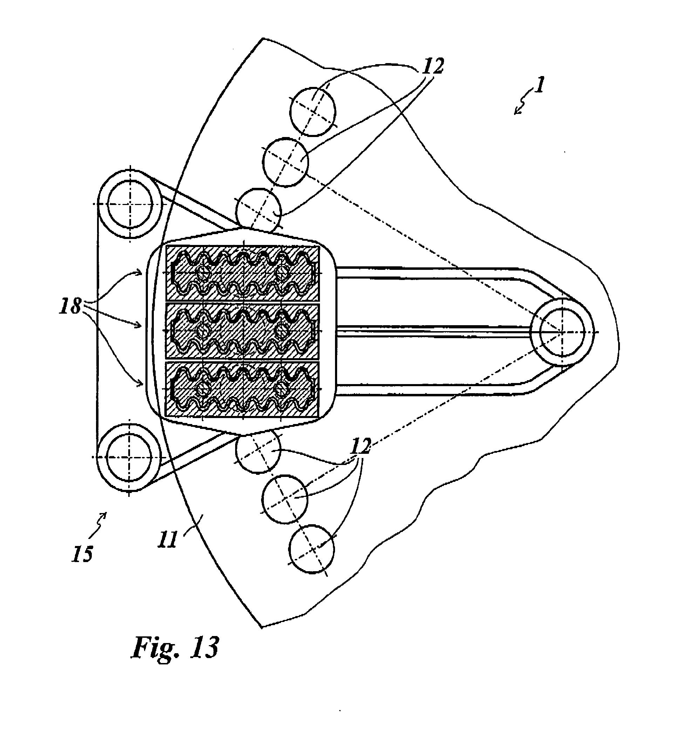

Fig. 13 zeigt ein zweites Ausführungsbeispiel der erfindungsgemäßen Glasverarbeitungsmaschine.

Die in Fig. 13 dargestellte Glasverarbeitungsmaschine 1 ist wie die in Fig. 1 und 2 dargestellte Glasverarbeitungsmaschine aufgebaut, mit dem Unterschied, dass anstelle eines Linearmotors drei Linearmotore nebeneinander angeordnet vorgesehen sind, so dass in einem Arbeitstakt drei Glasartikel gleichzeitig herstellbar sind.

Die Linearmotore 18 weisen einen rechteckförmigen Querschnitt auf, so dass bei gleicher Leistung und Bauhöhe der Teilungsabstand der Formen einer Gruppe zueinander verringert werden kann, wodurch ein Drehtisch kleinerer Abmessungen und damit kleinerer Massenträgheit mit entsprechend höherer Dynamik und gesteigerter Taktzahl ermöglicht wird.

Jeweils drei benachbarte Glasformen 12 sind auf dem Drehtisch in einer Linie angeordnet, so dass auch die Linearmotoren 18 eine kompakte Einheit bilden.

Bezugszeichenliste

| | |
|---|---|
| 1 | Glasverarbeitungsmaschine |
| 1 g | Gestell |
| 11 | Drehtisch |
| 12 | Pressform |
| 13 | Rinnensystem |
| 14 | Speiserkopf |
| 15 | Pressstation |
| 16 | Werkzeugaufnahme |
| 17 | Pressstempel |
| 17f | Federkorb |
| 18 | koaxialer Linearmotor |
| 18a | Motorachse |
| 18ab | Abtrieb |
| 18al | Linearlager |
| 18g | Motorgehäuse |
| 18k | Kühleinrichtung |
| 18l | Läufer |
| 18ls | Luftspalt |
| 18lk | Läuferkern |
| 18m | Läufermagnet |
| 18s | Stator |
| 18sk | Statorkern |
| 18w | Statorwicklung |

**Patentansprüche**

1.  Elektrischer Linearmotor (18) mit einem Stator (18s) und einem Läufer (18l), wobei der Stator (18s) elektrisch beaufschlagbare Statorwicklungen (18w) und eine unter Wirkung der Statorwicklungen (18w) aktive Statortläche aufweist und der Läufer (18l) Permanentmagnete (18m) und eine von magnetischen Feldlinien durchgriffene aktive Läuferfläche aufweist, wobei der Läufer (18l) relativ zum Stator (18s) linear in eine bestimmte Linearrichtung geführt ist unter Ausbildung eines Luftspalts (18ls) zwischen der aktiven Läuferfläche und der aktiven Statorfläche,
    **dadurch gekennzeichnet,**
    **dass** die aktive Läuferfläche und/oder die aktive Statorfläche uneben und nicht konstant gekrümmt ausgebildet sind bzw. ist und mindestens eine sich entlang der Linearrichtung längs erstreckende Erhebung und/oder mindestens eine sich entlang der Linearrichtung längs erstreckende Vertiefung aufweisen bzw. aufweist,

2.  Linearmotor nach Anspruch 1,
    **dadurch gekennzeichnet,**
    **dass** die aktive Statorfläche und die aktive Läuferfläche im Querschnitt senkrecht zur Linearrichtung komplementär zueinander ausgebildet sind.

3.  Linearmotor nach einem der vorangehenden Ansprüche,
    **dadurch gekennzeichnet,**
    **dass** die aktive Läuferfläche und/oder die aktive Statorfläche mehrere Erhebungen und Vertiefungen in einem regelmäßigen Muster angeordnet aufweisen bzw. aufweist.

4.  Linearmotor nach Anspruch 3,
    **dadurch gekennzeichnet,**
    **dass** das Muster der Erhebungen und Vertiefungen symmetrisch zu einer längs zur Bewegungsrichtung angeordneten Längsebene ausgebildet ist.

5.  Linearmotor nach einem der vorangehenden Ansprüche,
    **dadurch gekennzeichnet,**
    **dass** die Erhebungen und/oder Vertiefungen im Querschnitt senkrecht zur linearen Bewegungsrichtung wellenförmig mit abgerundeten Wellenbergen und/oder Wellentälern oder mit plissierten Wellenbergen undloder Wellentälern ausgebildet sind.

6.  Linearmotor nach einem der vorangehenden Ansprüche,
    **dadurch gekennzeichnet,**
    **dass** der Läufer (18l) in einem Innenraum des Stators (18s) vom Stator (18s) umgeben oder an einer Außenseite des Stators (18s) den Stator (18s) umgebend linear geführt ist unter Ausbildung eines ringförmigen Luftspalts zwischen der aktiven Läuferfläche und der aktiven Statorfläche.

7.  Linearmotor nach Anspruch 6,
    **dadurch gekennzeichnet,**
    **dass** die aktive Läuferfläche und/oder aktive Statorfläche einen senkrecht zur linearen Bewegungsrichtung ausgebildeten Querschnitt mit im wesentlichen runder Grundkonfiguration aufweist, wobei die Kontur dieser Grundkonfiguration zumindest abschnittsweise wellenförmig ist.

8.  Linearmotor nach einem der vorangehenden Ansprüche,
    **dadurch gekennzeichnet,**
    **dass** der Läufer (18l) in einem Innenraum des Stators (18s) vom Stator (18s) umgeben oder an einer Außenseite des Stators (18s) den Stator (18s) umgebend linear geführt ist unter Ausbildung eines ringförmigen Luftspalts zwischen der aktiven Läuferfläche und der aktiven Statortläche, und
    **dass** die aktive Läuferfläche und/oder die aktive Rotorfläche im Querschnitt senkrecht zur Linearrichtung ringförmig, aber nicht kreisringförmig ausgebildet sind bzw. ist,
    wobei der ringförmige Querschnitt die Kontur eines regelmäßigen oder unregelmäßigen Vielecks aufweist, dessen mindestens eine Ecke die mindestens eine Erhebung bildet'oder der ringförmige, nicht kreisringförmige Querschnitt die Kontur einer Rundfläche mit über den Verlauf der Kontur variierten Krümmungsradius aufweist dessen mindestens ein Krümmungsmaximum mit minimalen Krümmungsradius die mindestens eine Erhebung bildet und/oder dessen mindestens ein Krümmungsminimum mit maximalen Krümmungsradius die mindestens eine Vertiefung bildet.

9. Glasverarbeitungsmaschine mit mindestens einem elektrischen Linearmotor, der nach einem der vorangehenden Ansprüche ausgebildet ist,
   **dadurch gekennzeichnet,**
   **dass** der elektrische Linearmotor einen Pressenstempel und/oder einen Dosierplunger antreibt.

10. Glasverarbeitungsmaschine nach Anspruch 9
    **dadurch gekennzeichnet,**
    **dass** die Glasverarbeitungsmaschine einen Drehtisch (11) mit mehreren umfangsseitig angeordneten Glasformen (12) aufweist.

11. Glasverarbeitungsmaschine nach Anspruch 9 oder 10,
    **dadurch gekennzeichnet,**
    **dass** der Drehtisch (11) in eine Arbeitsphase schaltbar ist, in der der Drehtisch eine Position einnimmt, in der der mindestens eine Linearmotor (18) über einer Glasform (12) angeordnet ist, und dass der Drehtisch in eine Transportphase schaltbar ist, in der ein Schrittantrieb den Drehtisch (11) um den Teilungsabstand dreht.

12. Glasverarbeitungsmaschine nach einem der Ansprüche 9 bis 11,
    **dadurch gekennzeichnet,**
    **dass** mehrere Linearmotore (18) nebeneinander angeordnet sind.

13. Glasverarbeitungsmaschine nach Anspruch 12,
    **dadurch gekennzeichnet,**
    **dass** die Linearmotore (18) Läufer (18l) mit einem im Wesentlichen rechteckförmigen Querschnitt aufweisen.

14. Glasverarbeitungsmaschine nach Anspruch 13,
    **dadurch gekennzeichnet,**
    **dass** die Linearmotore (18) mit ihren Schmalseiten nebeneinander angeordnet sind.

15. Glasverarbeitungsmaschine nach einem der Ansprüche 12 bis 14,
    **dadurch gekennzeichnet,**
    **dass** die Linearmotore (18) fluchtend nebeneinander angeordnet sind.

**Fig. 1**

**Fig. 2**

**Fig. 3**

18s
18m
18sk
18g
18lk
18w
18ls
18a
18l
18

**Fig. 4**

18s
18m
18sk
18g
18lk
18w
18ls
18a
18l
18

**Fig. 5**

*Stand der Technik*

*Fig. 6*

*Fig. 7*

*Fig. 8*

*Fig. 9*

*Fig. 10*

*Fig. 11*

*Fig. 12*

*Fig. 13*

Europäisches
Patentamt

European
Patent Office

Office européen
des brevets

**EUROPÄISCHER RECHERCHENBERICHT**

Nummer der Anmeldung

EP 10 00 1197

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 100 55 080 A1 (BOSCH GMBH ROBERT [DE]) 16. Mai 2002 (2002-05-16) * Abbildung 3 * ----- | 1-15 | INV. H02K41/03 C03B9/41 C03B11/00 |
| X | DE 198 11 073 A1 (BLUM GMBH [DE]) 16. September 1999 (1999-09-16) * Abbildungen 1,4 * ----- | 1-15 | C03B11/02 C03B11/06 C03B11/16 C03B9/193 |
| X,D | US 2008/018179 A1 (QIU SONGGANG [US]) 24. Januar 2008 (2008-01-24) * Abbildungen 6-15 * ----- | 1-15 | |
| A,D | US 6 701 748 B1 (HARTMAN TERRY E [US] ET AL) 9. März 2004 (2004-03-09) * Abbildungen 1-3 * ----- | 9-11 | |
| A | JP 2006 248869 A (HOYA CORP) 21. September 2006 (2006-09-21) * Zusammenfassung * * Abbildung 3 * ----- | 1 | |
| A | US 2002/144519 A1 (BORSARELLI GIANCLAUDIO [IT] ET AL) 10. Oktober 2002 (2002-10-10) * Abbildungen 1-3 * ----- | 1 | RECHERCHIERTE SACHGEBIETE (IPC) H02K C03B |

Der vorliegende Recherchenbericht wurde für alle Patentansprüche erstellt

| Recherchenort | Abschlußdatum der Recherche | Prüfer |
|---|---|---|
| Den Haag | 28. Juli 2010 | Le Chenadec, Hervé |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 10 00 1197

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-07-2010

| Im Recherchenbericht angeführtes Patentdokument | Datum der Veröffentlichung | Mitglied(er) der Patentfamilie | | Datum der Veröffentlichung |
|---|---|---|---|---|
| DE 10055080 A1 | 16-05-2002 | KEINE | | |
| DE 19811073 A1 | 16-09-1999 | KEINE | | |
| US 2008018179 A1 | 24-01-2008 | US | 2006181157 A1 | 17-08-2006 |
| | | WO | 2006086514 A2 | 17-08-2006 |
| US 6701748 B1 | 09-03-2004 | AT | 402123 T | 15-08-2008 |
| | | AU | 9128401 A | 15-04-2002 |
| | | BR | 0114525 A | 23-12-2003 |
| | | CN | 1476417 A | 18-02-2004 |
| | | DK | 1330417 T3 | 20-10-2008 |
| | | EP | 1330417 A1 | 30-07-2003 |
| | | ES | 2311026 T3 | 01-02-2009 |
| | | HK | 1061671 A1 | 18-08-2006 |
| | | JP | 2004510670 T | 08-04-2004 |
| | | MX | PA03003026 A | 03-12-2004 |
| | | WO | 0228787 A1 | 11-04-2002 |
| | | ZA | 200301678 A | 08-09-2003 |
| JP 2006248869 A | 21-09-2006 | CN | 1834046 A | 20-09-2006 |
| | | KR | 20060100937 A | 21-09-2006 |
| US 2002144519 A1 | 10-10-2002 | AT | 350348 T | 15-01-2007 |
| | | DE | 60217209 T2 | 15-11-2007 |
| | | EP | 1243566 A2 | 25-09-2002 |
| | | ES | 2278825 T3 | 16-08-2007 |
| | | IT | TO20010281 A1 | 23-09-2002 |
| | | JP | 2002321932 A | 08-11-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 1330417 B1
- US 20060181157 A1